# EUROPEAN PATENT SPECIFICATION

(11) **EP 2 217 348 B1**
(45) Date of publication and mention of the grant of the patent: **13.12.2017**
(21) Application number: 08767096.4
(22) Date of filing: 03.07.2008
(51) Int. Cl.: B01D 33/23

(54) **SECTOR MEANS TO A FILTRATING DEVICE, PREFERABLY ARRANGED ROTATING**
VORZUGSWEISE DREHBAR ANGEORDNETES SEKTORMITTEL FÜR EINE FILTRIERVORRICHTUNG
MOYEN DE SECTEUR POUR DISPOSITIF DE FILTRATION, DE PRÉFÉRENCE AGENCÉS ROTATIVEMENT

(30) Priority: 05.07.2007 SE 0701625
(43) Date of publication of application: 18.08.2010
(73) Proprietor: Rasmussen, Johan, 186 33 Vallentuna (SE)
(72) Inventor: Rasmussen, Johan, 18633 Vallentuna (SE)
(74) Representative: Groth & Co. KB
(86) International application number: PCT/SE2008/000424
(87) International publication number: WO 2009/005440

(56) References cited:
- WO-A1-2004/065687
- SE-B- 460 523
- SE-C2- 521 492
- SE-C2- 528 029
- US-A- 3 948 779
- US-A- 4 348 284
- US-A- 4 655 920
- US-A- 5 057 217
- US-A- 5 647 982

## Description

The invention relates to a sector means, preferably arranged rotating, which sector means includes a support for fluid transport through it, which support essentially includes at least one net of metal having relatively spaced apart meshes.

Prior art of such means includes metal sheets provided with holes, folded plates or grids mutually distanced from each other by means of distance holders or by means of bulbs pressed into the plates. Swedish Patent No. 8700626-8 discloses such prior art, as one example.

One drawback to said prior art design is that the plate must be relatively stiff or the grid must be relatively narrow and/or coarse in order to provide support enough to the filtrating layers, wherethrough heavy weighted and expensive sector means are created. Furthermore, plates - provided with impressions, protrusions, with holes as well as without - suffer from the problem that folding of the plate is more or less critical in respect to direction, due to the fact that wrongly made folds or plaits might hinder or stop the desired streaming of fluid through the sector means in its radial direction. The PCT-application WO98/11972 discloses one example of such behaviour.

A rotating disc filter is also previously known by US 4,655,920 which disc filter consists of disc sectors about a filter shaft. Saddles of a folded plate form sector deck and support for filter cloth, and the troughs of the folded plate together with the filter cloth abutting the saddles from internal filtrate channels extending from the outer periphery of the sector towards the filter shaft. The orientation of these channels is radial since the purpose of the channels is to provide for a radial flow direction through the disc filter. This is the only flow direction along which a dewatered suspension can reach the funnel and enter the filter shaft.

My own Swedish Patent 0400659-9 (528 029) discloses a sector means built by two metal nets, which together creates a stiff sector means providing fluid running through its central part as such but can be designed as and constitute filtrating surfaces as well or can, if so desired, be provided with separate filtrating structures, for example one woven filtrating bag enclosing the sector means and made from polymeric material.

The advantage of said last mentioned embodiment is that central through running of fluid is easily taking place if spaced apart meshes are used but in such a case further filtrating structures are as a rule required on the sector means. One certain disadvantage of this prior art embodiment is furthermore that the active support between the two nets is more or less shaped as a point and that two nets are required to create the streaming through and support anticipated.

The aim of the present invention is, by fairly small amounts of material having relatively low weight, supply a sector means allowing streaming through of fluid and having a large stiffness of its own in order to be able to filtrate, either by itself or in cooperation with further filtrating structures.

The aims as specified above and other aims have, at the sector means as specified in the preamble of the specification, been solved according to the present invention in that said metal net is folded along essentially its entire surface, wherein said folds or plaits are spread out crosswise the radial direction of said sector means. Furthermore, at least two of the longer side edges of said net are provided with U-shaped edge supports.

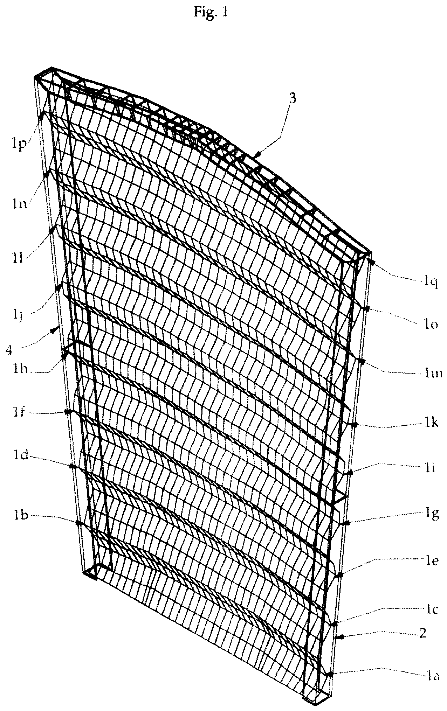

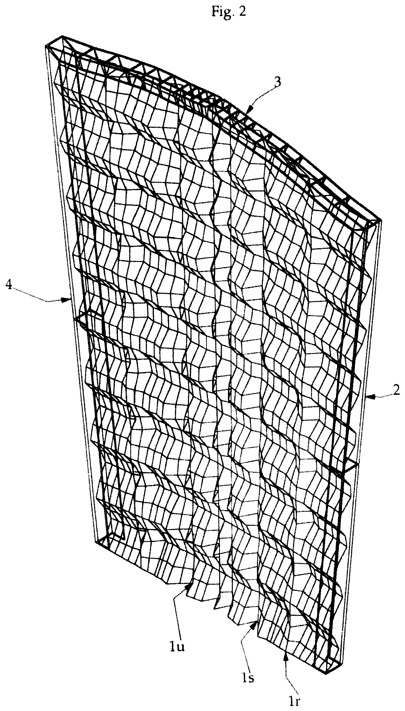

Further features of the invention appear from the attached claims and from the description below and from the attached drawings, in which Fig. 1 in a perspective view shows a first sector means according to the invention and Fig. 2 shows a second sector means according to the invention.

The sector means as shown in Fig. 1 includes one net 1 supporting and, in related case, also filtrating, which net preferably but not necessarily is made from stainless steel. Said net is to advantage made from coarse strands or wires/filaments in warp and weft directions with relatively spaced apart mesh size. Said net 1 is along the longer edges provided with, preferably, a U-shaped list 2-4 (shown in Fig. 1 visualized transparent), preferably but not of necessity made from a suitable metal, for example stainless steel.

Alternatively, a rigid body, for example made from a preferably cured polymer, can terminate the three longer edges of the net 1, for example including polyurethane.

Said net 1 is in the embodiment shown in Fig. 1 folded, bent or in another way shaped to one part of a wave distribution or a wave front, which as an example can be distributed essentially in the radial direction of the sector means or to advantage essentially straight across said sector means with the wave peaks 1b-1p and the wave valleys 1 a-1q of the net 1 having a distance in between them, seen in a direction through the sector means, essentially corresponding to the inner distance between the flanges 2-4 of the U-shaped list. The result thereof is that said net 1 along the three longer sides thereof is supported and held by the U-shaped list 2, 3, 4 but the fourth side, the lowest one according to Fig. 1, is open to permit transport of separated fluid away through it.

Said net 1 is preferably folded as short distances as possible between the longer sides of the sector means but said folds are distributed to such extensions that the wave peaks 1b-1p and the wave valleys 1a-1q of the net 1 are mechanically interacting with at least the members 2 and 4 of the list but alternatively or as a complement, a further net with finer mesh size (not shown in Fig. 1) might be located between inner side of each flange and the net 1 in mechanical cooperation with the net 1 as well as with the list 2, 3, 4 and is acting as a filtrating structure for the material, for example paper pulp fibres, which are intended to be separated from fluid by means of the sector means according to the invention.

In order to provide a stable, strong and even support, said folds etc. are distributed over basically the entire sector means and are essentially mutually parallel.

Instead of using said further net with finer mesh size (not shown in Fig. 1) on both sides of said net 1 or as a further complement, the sector means - net 1 and list 2, 3, 4 - can be enclosed by, for example, a filter bag made from a polymeric material acting as a filtrating structure. In said last mentioned case, the list 2-4 also acts as a protection against wearing between the edges of the net 1 and the filter bag.

The embodiment shown in Fig. 2 has the same basic design as the embodiment shown in Fig. 1 and might be supplemented in the same way as the embodiment according to Fig. 1 but here, said net 1 also has been provided with folds or plaits 1r, 1s, 1t, 1u, 1v, 1x essentially extending in a radial direction of the sector means, which folds or plaits 1r, 1s, 1t, 1u, 1v, 1x preferably are located essentially in the central parts of the sector means and are extending to and cooperate mechanically with the flanges of the list 3.

The list 2-4 can be made in one piece or in many pieces as desired. If required or desired, the list 2-4 at its parts turned toward the net 1 (for example, the inner surfaces of the flanges of the list) might be provided with fiction raising means, with suitable, heat resistant glue or might possible be welded in order to secure an effective mechanical cooperation between the net 1 and the list 2-4.

It is obvious that other directions than the ones specified above might be used - if so desired or requested - in respect to the folds 1a-1x or plaits.

The features as specified in the claims below and as disclosed by the drawings are regarded as included in the specification as well.

## Claims

1. Sector means for a filtrating disc, to be arranged rotating, which sector means includes a support for fluid transportation through it, which support essentially includes shaped nets of metal having relatively spaced apart meshes, wherein said sector means includes at least one net of metal (1) folded (1a-1x) along essentially its entire surface, wherein said at least one folded net of metal (1) on both sides thereof is provided with a filtrating structure, for example a net having narrow meshes, wherein said at least one folded net of metal (1) in size and shape corresponds essentially to the size and shape of the sector in question and wherein two or more of the longer side edges of said at least one folded net of metal (1) are provided with U-shaped edge support (2-4) saddling said two or more longer side edges of said at least one folded net of metal (1) and wherein the internal distance between the flanges of said U-shaped edge support (2-4) essentially corresponds to the distance between wave peak and wave valley of said at least one folded net of metal (1), **characterized in that** said folds (1a-1q) of said at least one folded net of metal (1) are spread out essentially crosswise the radial direction of said sector in question.

2. Sector means according to Claim 1 **characterized in that** said at least one folded net (1) of metal as well as said U-shaped edge support (2-4) are enclosed by said filtrating structure.

3. Sector means according to Claim 1, **characterized in that** said at least one folded net (1) of metal is enclosed by a filtrating structure, for example one structure consisting of two nets of metal having folded or bent edges, which filtrating structure is saddled and restrained by said U-shaped edge support (2-4).

## Patentansprüche

1. Sektormittel für eine Filtrierscheibe, das drehend anzuordnen ist, wobei das Sektormittel eine Stütze für Fluidtransport durch es hindurch aufweist, wobei die Stütze im Wesentlichen geformte Metallnetze mit relativ beabstandeten Gittern aufweist, wobei das Sektormittel mindestens ein Metallnetz (1) aufweist, das im Wesentlichen entlang seiner gesamten Oberfläche gefalzt ist (1a - 1x), wobei das mindestens eine gefalzte Metallnetz (1) auf seinen beiden Seiten mit einer Filtrierstruktur wie beispielsweise einem Netz mit engem Gitter versehen ist, wobei das mindestens eine gefalzte Metallnetz (1) in Größe und Gestalt im Wesentlichen der Größe und Gestalt des betreffenden Sektors entspricht und wobei zwei oder mehr der längeren Seitenränder des mindestens einen gefalzten Metallnetzes (1) mit einer U-förmigen Randstütze (2 - 4) versehen sind, die die zwei oder mehr längeren Seitenränder des mindestens einen gefalzten Metallnetzes (1) überspreizen, wobei der innere Abstand zwischen den Flanschen der U-förmigen Randstütze (2 - 4) dem Abstand zwischen Wellenberg und Wellental des mindestens einen gefalzten Metallnetzes (1) im Wesentlichen entspricht, **dadurch gekennzeichnet, dass** sich die Falze (1a-1q) des mindestens einen gefalzten Metallnetzes (1) im Wesentlichen quer zur radialen Richtung des betreffenden Sektors erstrecken.

2. Sektormittel nach Anspruch 1, **dadurch gekennzeichnet, dass** das mindestens eine gefalzte Metallnetz (1) sowie die U-förmige Randstütze (2 - 4) durch die Filtrierstruktur umschlossen sind.

3. Sektormittel nach Anspruch 1, **dadurch gekennzeichnet, dass** das mindestens eine gefalzte Metallnetz (1) von einer Filtrierstruktur wie beispielsweise einer Struktur, die aus zwei Metallnetzen mit gefalzten oder gebogenen Rändern besteht, umschlossen ist, wobei die Filtrierstruktur von der U-förmigen Randstütze (2 - 4) überspreizt und gehalten ist.

## Revendications

1. Moyen formant secteur pour un disque de filtration, destiné à être installé de manière rotative, ledit moyen formant secteur comprenant un support servant au transport de fluide à travers lui, ledit support comprenant essentiellement des filets de métal façonnés comportant des mailles relativement espacées, ledit moyen formant secteur comprenant au moins un filet de métal (1) plié (1a à 1x) le long essentiellement de sa surface entière, ledit ou lesdits filets de métal (1) pliés étant dotés, sur leurs deux côtés, d'une structure de filtration, par exemple d'un filet comportant des mailles étroites, ledit ou lesdits filets de métal (1) pliés correspondant essentiellement, du point de vue de la taille et de la forme, à la taille et à la forme du secteur en question et au moins deux des bords latéraux plus longs dudit ou desdits filets de métal (1) pliés étant dotés d'un support de bord en forme de U (2 à 4) chevauchant lesdits au moins deux bords latéraux plus longs dudit ou desdits filets de métal (1) pliés et la distance intérieure entre les rebords dudit support de bord en forme de U (2 à 4) correspondant essentiellement à la distance entre le point le plus haut d'une ondulation et le point le plus bas d'une ondulation dudit ou desdits filets de métal (1) pliés, **caractérisé en ce que** lesdits plis (1a à 1q) dudit ou desdits filets de métal (1) pliés sont répartis essentiellement transversalement dans la direction radiale dudit secteur en question.

2. Moyen formant secteur selon la revendication 1, **caractérisé en ce que** ledit ou lesdits filets de métal (1) pliés ainsi que ledit support de bord en forme de U (2 à 4) sont entourés par ladite structure de filtration.

3. Moyen formant secteur selon la revendication 1, **caractérisé en ce que** ledit ou lesdits filets de métal (1) pliés sont entourés par une structure de filtration, par exemple une structure constituée de deux filets de métal comportant des bords pliés ou courbés, ladite structure de filtration étant chevauchée et retenue par ledit support de bord en forme de U (2 à 4).
